(19) Europäisches Patentamt
European Patent Office
Office européen des brevets

(11) EP 3 182 078 A1

(12) EUROPEAN PATENT APPLICATION

(43) Date of publication:
21.06.2017 Bulletin 2017/25

(51) Int Cl.:
G01J 3/02 (2006.01)   G01J 3/453 (2006.01)

(21) Application number: 15200977.5

(22) Date of filing: 17.12.2015

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicants:
• IMEC VZW
3001 Leuven (BE)
• Universiteit Gent
9000 Gent (BE)

(72) Inventors:
• BAETS, Roeland
3001 Leuven (BE)
• ROELKENS, Günther
Leuven 3001 (BE)
• RYCKEBOER, Eva
3001 Leuven (BE)

(74) Representative: DenK iP
Leuvensesteenweg 203
3190 Boortmeerbeek (BE)

(54) **STATIONARY WAVE INTEGRATED FTS WITH BROADBAND OPERATION**

(57)     An optical device for assisting in Fourier transform spectrometry comprising a radiation input means for receiving a polarized radiation beam, two substantially parallel waveguides having different effective and group optical indices, whereby the two substantially parallel waveguides are arranged with respect to each other so that their evanescent tails of the radiation modes overlap and thus produce a stationary spatial interference signal in the space between the two substantially parallel waveguides, an optical splitter for dividing the polarized radiation beam received at the radiation input means into the two parallel waveguides, and a coupling means being positioned between the parallel waveguides for coupling the stationary spatial interference signal from the space between the waveguides to a radiation sensor.

FIG. 3

## Description

### Field of the invention

The invention relates to the field of spectrometry. More specifically it relates to a system and method for obtaining an interferogram.

### Background of the invention

Spectrometry is based on the decomposition and study of an electromagnetic signal (normally optical signal, but also encompassing infrared radiation) after it has interacted with matter, in order to study properties of the matter. In general, bandwidth and spectral resolution are important concepts in spectrometry, because if the bandwidth is not wide enough and/or the minimum wavelength resolved by the spectrometer is too large, important information contained in the radiation may be lost. Fourier transform infrared spectrometers (FTS or FTIR) and stationary-wave integrated FTS (SWIFTS) are widely used techniques to study the interaction between light and molecules. Both interference techniques are based on interfering an optical signal with a delayed version of itself. This creates an interference pattern that is the Fourier transform of the spectral content of the signal. For obtaining the pattern, the optical signal can be divided and redirected, such that the first part of the signal is delayed by a varying amount compared to the second part of the signal before both parts are recombined again to create the Fourier interference pattern.. Other methods, such as SWIFTS-Lippmann, obtain the Lippmann pattern by making the wave interfering with itself via a mirror. The interferogram is obtained by detecting the pattern with one or more optical detectors, thus spectrometers integrated in photonic integrated circuits are desirable. The bandwidth and spectral resolution are given by the propagation medium and wavelength. It is possible to optimize these values, but only within a certain range. Document "Proc. of SPIE Vol. 8816 86160M-2" (DOI 10.1117/12.2000451) describes the adaptation of the SWIFTS principle for tunable multimode lasers, Bragg sensors or optical coherent tomography, and the possibility of using visible and near infrared radiation. Most of the examples are based on probing a waveguide, for instance using nanodots, but it does not solve the limitations of bandwidth and resolution. It also presents a powerful solution with high resolution by including a movable mirror for scanning of the optical path difference, but this solution is complicated and not integratable in a photonics system.

### Summary of the invention

It is an object of embodiments of the present invention to provide an optical system and spectroscopic sensor for creating and analyzing the interferogram of a probe signal, with strong photonics integration capabilities, good spectral resolution (or frequency range) and an interference period such that it reduces or avoids subsampling of the interferogram.

The present invention relates to an optical device for assisting in Fourier transform spectrometry comprising:

- a radiation input means for receiving a polarized radiation beam,
- two substantially parallel waveguides having different effective and group optical indices, whereby the two substantially parallel waveguides are arranged with respect to each other so that their evanescent tails of the radiation modes overlap and thus produce a stationary spatial interference signal in the space between the two substantially parallel waveguides,
- an optical splitter for dividing the polarized radiation beam received at the radiation input means into the two parallel waveguides, and
- a coupling means being positioned between the parallel waveguides for coupling the stationary spatial interference signal from the space between the waveguides to a radiation sensor.

It is an advantage of embodiments of the present invention that subsampling is reduced with respect to the prior art sensors, further increasing the frequency range detection of the spectrometer. It is a further advantage of embodiments of the present invention that the optical bandwidth of the optical device increases without reducing resolution in a miniaturized device.

The two substantially parallel waveguides may have a different width, a different height, a different waveguide cladding and/or are made of a different material so as to induce the different optical refractive index. It is an advantage of embodiments of the present invention that a plurality of design parameters can be used for introducing a difference in optical refractive index. It is an advantage of embodiments of the present invention that the difference in optical refractive index can be selected to be large such that the group index difference between the modes in the waveguides can be large resulting in a better resolution of the system. Alternatively or in addition thereto, the length of the interferogram and thus of the coupling means can be selected to be larger.

The optical splitter may be a tunable splitter allowing to tune the power ratio between the modes of the two radiation beams coupled respectively into the two parallel waveguides.

It is an advantage of embodiments of the present invention that the power of the modes of the two radiation beams coupled respectively into the two parallel waveguides can be tuned, thus allowing that variation in strength of the beams, for example due to the change in refractive index, can for example be avoided so that the interference pattern is created using interfering beams of equal strength. The latter advantageously results in a better fringe contrast, thus allowing more accurate measurements. The optical device furthermore may comprise one or more refractive index tuning means for tuning a refractive index of one or both of the parallel waveguides in a region adjacent to the coupling means. The one or more refractive index tuning means may for example be heaters, electrodes for electrical carrier injection or liquid crystals. The tuning of the refractive indices can allow to optimize the minimum sampling pitch to the sampling pitch of the detection system.

The optical device may be adapted for tuning the position of the zero optical path difference in the waveguides away from the coupling means and/or the optical device may be adapted in design for having a zero optical path difference in the waveguides away from the coupling means. It is an advantage of embodiments of the present invention that by positioning the point of zero optical path difference in the waveguides away from the coupling means, the required dynamic range of the detection system can be relaxed since the amplitude variations in the generated interferogram can be smaller, e.g. less extreme.

The coupling means may comprise any of an array of point scatterers and/or a continuous grating such as for example a symmetrical grating or, alternatively, for example an asymmetrical grating. It is an advantage of embodiments of the present invention that, when an array of point scatterers is used, the latter results in an inexpensive and accurate coupling means. It is an advantage of embodiments of the present invention that an accurate interferogram may be obtained. It is an advantage of embodiments using an asymmetrical grating that the outcoupling of the radiation can be oriented vertically with respect to (orthogonally to) the coupling means plane (vertical out-of-coupling means-plane coupling, e.g. vertical out-of-grating-plane coupling) while avoiding strong back reflections for the coupling means. The coupling means may have a length L such that $L = \frac{1}{\Gamma S + \alpha}$ with $\Gamma$ the confinement factor of the waveguide mode in the coupling means, S the strength of the coupling means and $\alpha$ the waveguide losses. It is an advantage of embodiments of the present invention that the gap between the waveguide and the grating can be chosen to optimize the confinement factor. It is an advantage of embodiments of the present invention that the outcoupled power can be kept constant for a given length unit. For a monochromatic input, this would lead to a fixed amplitude factor for the standing wave pattern, which can be established by gradually varying the gap between each waveguide and the gratings.

The coupling means may be a grating having a fill factor of 0.5 and/or having a pitch such that the central operating frequency of the grating is positioned in between the frequencies for which consecutive order of backreflection occur for the grating. It is an advantage of embodiments of the present invention that by selecting a fill factor of 0.5, even diffraction order reflections are suppressed such that backreflection from the grating in the waveguide or from one waveguide to the other waveguide is avoided. It is an advantage of embodiments of the present invention that by optimally selecting the pitch, the bandwidth can be optimized without reflection dips in the measured spectrum.

A single waveguide may be present between the radiation input means and the radiation beam splitter. At least part of the parallel waveguides may be integrated in a waveguide substrate, e.g. a waveguide semiconductor substrate such as for example a SOI (Silicon On Insulator) substrate or a Silicon-Nitride-On-Insulator substrate, the present invention not being limited thereto. It is an advantage of embodiments of the present invention that circuit integration of a spectrometer can be obtained. It is a further advantage that semiconductor technology can be used for its manufacture. At least part of the parallel waveguides may be integrated on a photonics platform such as for example a silicon photonics platform or a SiN photonics platform, the present invention not being limited thereto.

The present invention also relates to a spectrometer for performing Fourier Transform spectrometry, the spectrometer comprising an optical device as described above and a radiation detector arranged for receiving the radiation coupled out by the coupling means.

The radiation detector may be any of a CMOS imager or a photodiode array. The spectrometer may comprise a lens for imaging the radiation onto said radiation detector.

The optical element and the radiation detector may both be integrated in a same waveguide substrate or in different waveguide substrates bonded to each other.

The present invention also relates to a method of obtaining an interferogram from an electromagnetic signal, comprising

- receiving a polarized radiation beam
- splitting the radiation beam in two radiation beams and coupling these into two substantially parallel waveguides of different effective and group optical indices, the two substantially parallel waveguides being arranged with respect to each other so that their evanescent tails of the radiation modes overlap and thus produce a stationary spatial interference signal in the space between the two substantially parallel waveguides,

- coupling the interference pattern to a detector array for recording the interferogram.

It is an advantage of embodiments of the present invention that subsampling of the interferogram is reduced or even avoided.

The present invention also relates to the use of an optical device as described or a spectrometer as described above for any of Raman spectrometry, fluorescence spectrometry or post-dispersive spectrometry.

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

**Brief description of the drawings**

FIG. 1 illustrates an optical system suitable for embodiments of the present invention comprising a single waveguide, a splitter and two parallel waveguides of different optical indices separated by a gap comprising a diffraction grating.

FIG. 2 illustrates an optical system integrated on a silicon-on-insulator photonic integrated circuit comprising two parallel waveguides of different widths and the profile of the field travelling in each guide, including the evanescent field.

FIG. 3 illustrates an exemplary embodiment of the spectrometer of the present invention, including a plurality of sensors.

FIG. 4 illustrates two possible grating configurations

FIG. 5 illustrates different parameters that can be tailored in the present invention.

FIG. 6 illustrates embodiments with systems allowing adjustable optical indices.

FIG. 7 illustrates an embodiment with active control of Optical Path Difference (OPD).

FIG. 8 illustrates embodiments with adapted Zero-OPD by design.

FIG. 9 illustrates embodiments with optical coupling systems comprising lenses.

FIG. 10 illustrates two embodiments of the spectrometer of the present invention comprising a pixel array in an integrated CMOS system.

FIG. 11 illustrates an embodiment comprising an attached photodiode array.

FIG. 12 shows a flowchart diagram for producing an interferogram according to the present invention.

FIG. 13 shows the effective index of a ridge waveguide for different values of its width.

The drawings are only schematic and are non-limiting. In the drawings, the size of some of the elements may be exaggerated and not drawn on scale for illustrative purposes.

Any reference signs in the claims shall not be construed as limiting the scope.

In the different drawings, the same reference signs refer to the same or analogous elements.

**Detailed description of illustrative embodiments**

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

With "substantially parallel waveguides" and "substantially parallel diffraction grating" it is meant waveguides and gratings that are parallel within an error that does not affect the optical properties for the present application.

Where in embodiments of the present invention reference is made to "plurality of photosensors" or equivalently "photodetector array", reference is made to one or more arrays of sensors for detecting radiation in the IR, visible or UV spectrum, and it may comprise any suitable configuration, including pixelated arrays. For example, an active pixel sensor can be considered as a plurality of photosensors in the present disclosure, because an active pixel sensor comprises an array of pixels, each pixel containing a photodetector.

In a first aspect, the present invention relates to an optical device for assisting in Fourier Transform spectrometry or to a spectrometer for performing Fourier Transform spectrometry. The present invention is based on the retrieval of the interference pattern of radiation produced by interfering evanescent waves in between parallel waveguides. The spectrometer according to embodiments of the present invention is suitable for analyzing radiation such as optical light, but it is not limited thereto, and it can also be used for analyzing for example infrared radiation. According to embodiments, the optical device or spectrometer makes use of polarized radiation. According to embodiments of the present invention, the optical device comprises a radiation input means for receiving a polarized radiation beam. It also comprises two substantially parallel waveguides having different effective and group optical indices. In waveguides, the effective optical index depends on the material, the shape and size of the waveguide, the environment of the waveguide and other parameters such as pressure, etc. Waves travelling in the waveguide create evanescent fields E outside the waveguide core, for example in the air or in the cladding. Thus, evanescent fields E outside the waveguide core decay exponentially according to an attenuation factor $\kappa$ which depends of the optical index of the waveguide. The present invention produces evanescent waves using the same radiation beam with a fundamental mode (same polarization) travelling along the two waveguides. The fundamental mode is excited in the same direction, carrying the same spectral content, but the waveguides having different optical indices.

The two substantially parallel waveguides are arranged with respect to each other so that the evanescent tails of the radiation modes overlap and thus produce a stationary spatial interference signal in the space between the two substantially parallel waveguides. The distance between the parallel waveguides thus is small enough, i.e. the waveguides are brought in proximity, to provide interference of the tails of evanescent wave stemming from the modes propagating in each waveguide. As indicated, this effect generates a stationary spatial interference pattern, also referred to as interferogram, in the space between the parallel waveguides.

In order to get the radiation into the parallel waveguides, the device also comprises an optical splitter for dividing the polarized radiation beam received at the radiation input means into the two parallel waveguides.

According to embodiments of the present invention, the device also comprises a coupling means being positioned between the parallel waveguides for coupling the stationary spatial interference signal from the space between the waveguides to a radiation sensor. The interference pattern thus can be probed in region of a length L between the waveguides, i.e. using the coupling means. In some embodiments, the interference pattern is coupled to the radiation detector by a coupling means (such as a diffraction grating) between the parallel waveguides. Although the gap between the waveguides should be small enough for the evanescent waves to interfere, if the distance is smaller than a minimum value, frustrated total internal reflection may occur. Thus, a gap between the waveguides with at least a minimum value must exist, and the coupling means can be provided there between.

The interference period of the pattern is determined by the difference between the optical indices. The present invention allows great control over the interference period, and very large periods can be obtained. More explicitly, if $\lambda$ is the wavelength of the light and n1 and n2 are the optical indices of the first and second waveguide and ng1 and ng2 are the groups indices of the first and second waveguide, in case of the present invention, the interference period would be given by the absolute value of $\lambda$/(n1-n2). For a spectrometer of length L, the spectral resolution R would be:

$$R = \lambda/\Delta \lambda = L*(ng1-ng2)/\lambda \approx L*(n1-n2)/\lambda$$

In general, a beat mode is generated with two longitudinal beams of optical wavelength $\lambda$ interfering with each other, with a spatial frequency f =(n1-n2)/$\lambda$. In the case of the present invention, the beating between a first mode propagating through the first waveguide (effective index n1) with a second mode propagating through the second waveguide (effective index n2) produces an interference pattern. This pattern presents a much larger interference period for a given wavelength than for the case of a standard standing wave formed by existing Fourier or Lippmann interferometry. Thus the bandwidth can increase without reducing the resolution.

In comparison, existing spectroscopic techniques have an interference period given by X/2*n, which is larger than |$\lambda$/(n1-n2) for either case of n being n1 or n2. An advantage of the present invention is that subsampling is reduced or even avoided, allowing for a very wide (theoretically infinite) range of frequency of operation. An additional advantage of the proposed structure is a reduced sensitivity to temperature changes compared to existing spectrometers, because the interferogram depends on the difference of optical indices ($\Delta$n), instead of on a single optical index (n).

According to some embodiments of the present invention, where a spectrometer is envisaged, the spectrometer also comprises a radiation detector for detecting the radiation coupled from in between the parallel waveguides. The radiation detector may in one embodiment comprise a plurality of photosensors which are arranged for capturing the interference pattern for its further analysis and/or display. The radiation detector may comprise a photosensor array having a certain pixel pitch (PP), defined as the distance between each individual photodetector. The pixel pitch PP and the speed of the radiation beam (c) determine the optical frequency range of the spectrometer. While the optical frequency range of existing FTS are limited to c/(2*n*PP), the current solution in principle only has a minimum optical wavelength that can be unambiguously detected, which is the shortest wavelength that can be resolved and it is determined by the Shannon-Nyquist criterion, calculated as 2*PP*(n2-n1). Thus, the optical frequency range may be broadened in embodiments of the present invention.

The spectrometric information can be simultaneously collected, and no scanning function or moveable part is required for spectrum restoration. This may allow interference analysis in-situ with a broad spectrum.

The spectrometer of the present invention has a smaller size compared to existing spectrometers with similar characteristics. The wavelength resolution presents only a strict minimum wavelength rather than a limited spectral range. In theory there is no upper limit for the wavelength, although in practice the upper limit is determined either by cut-off, absorption or strong leakage to the substrate of the optical waveguide mode at long wavelength, or by the cut-off wavelength of the detector array, or by the limited length of the spectrometer, but most of these parameters may be varied by design. In embodiments of the present invention, the upper limit can be made much higher than in existing devices.

By way of illustration, the present invention not being limited thereto, further features and advantages of systems according to embodiments of the present invention can be seen in the description of an example of the optical device according to a particular embodiment.

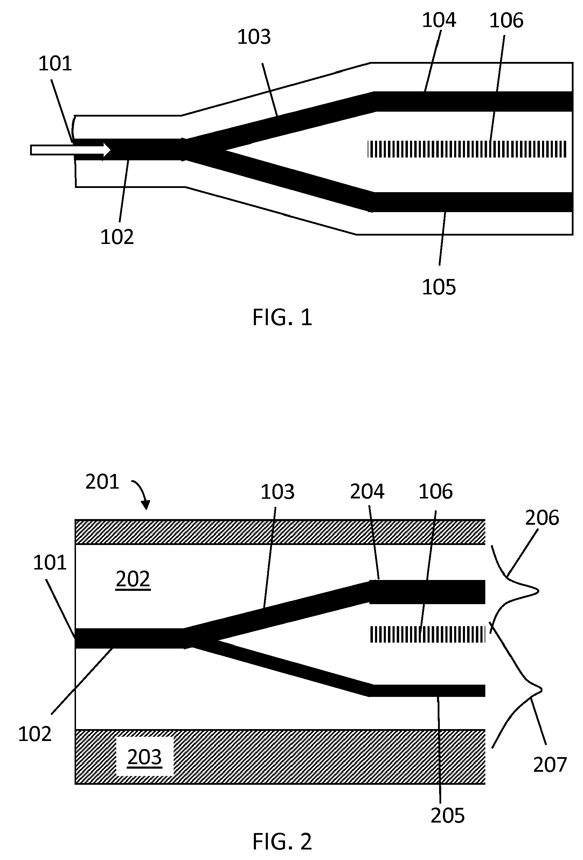

FIG. 1 shows a top view of an example of embodiments of an optical device (optical circuit) for a spectrometer of the present invention, comprising a radiation input means 101 for introducing EM radiation such as visible light, infrared radiation or others in the device, e.g. in a single waveguide 102 comprised in the device. A splitter 103 is used to split any introduced EM radiation beam in two parallel waveguides 104, 105 with different optical indices, for example comprising materials with different optical indices. For example, they may comprise the same material, but one of the waveguides may comprise additives or doping elements which change the optical index. An alternative may be that the waveguides have a different width. Yet another alternative may be that the height or cladding region is different. The splitter 103 may comprise a beam splitter, a multimode interference (MMI) splitter, or any other suitable device for splitting a radiation beam into two radiation beams. According to embodiments of the present invention, the device comprises a coupling means 106 arranged between the waveguides.

FIG. 2 shows the top view of another embodiment of an optical system suitable for a spectrometer according to an embodiment of the present invention. The optical system is provided on top of a planar waveguide substrate 201, for example a Silicon-On-Insulator (SOI) structure comprising a layer of silicon 202 and un underlying oxide layer 203 or for example a Silicon-Nitride-On-insulator substrate comprising a layer of silicon nitride 202 and an underlying oxide layer 203. The optical system may comprise a radiation input means 101, an optional single waveguide 102 and a splitter 103, and parallel waveguides 204, 205, in the present example having different widths, hence their effective and group optical indices are also different. The radiation travelling through the wide waveguide 204 will present a field 206 given by the effective optical index of the waveguide 204, which is different from the field 207 of the narrow waveguide 205. Moreover both waveguides are arranged close enough such that the evanescent fields of the fields 206, 207 outside of the waveguides interfere. Any or each of the waveguides 102, 204, 205 may also comprise silicon, or may comprise other materials suitable for a waveguide. Further, they may form a photonics structure integrated in a chip.

The waveguides used in the present spectrometer may be of any suitable type. For example, they may be multimode waveguides. They may be planar or non-planar waveguides such as channel waveguides: buried channel, ridge or rib waveguides which have the advantage of a simple layout and fabrication, even diffused waveguides are possible. The spectrometer may comprise a combination of different waveguides, for example the single input waveguide may be rib-type and the parallel waveguides may be ridge-type.

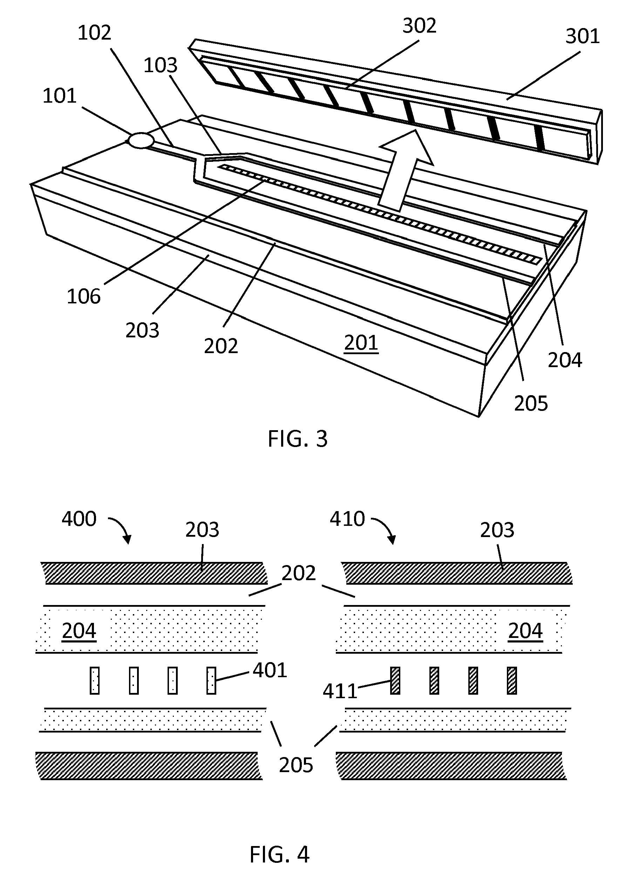

FIG. 3 shows a perspective of an exemplary spectrometer according to an embodiment of the present invention comprising as before a waveguide substrate 201 with a layer 202 (e.g. silicon or silicon nitride) on top of the layer 203 (e.g. an oxide layer). A radiation input means 101 introduces the radiation in a rib waveguide 102 (it may be also a ridge waveguide), the splitter 103 introduces the radiation travelling in the same direction in two parallel waveguides, a narrow waveguide 205 and a wide waveguide 204, which have a different optical index due to their different widths. Any interference pattern forming in between the parallel waveguides 205, 204 is coupled to a sensor array 301 (e.g. a photodetector array) via the coupling means, in this example being a diffraction grating 106. The photodetector array may comprise a plurality of pixels or sensors 302 for detecting e.g. visible light or IR radiation from the grating 106. The pixels may have enough length to retrieve most or all of the interference pattern. The optical frequency range in the present invention does not depend so heavily on the pixel pitch, and subsampling can be reduced or avoided.

In some embodiments of the device, the radiation detector may comprise a photodiode array, CMOS imagers for visible light, and/or infrared detectors. The radiation detector may be positioned in close vicinity to the diffraction grating, or it may be distanced from it. It may be on top of the waveguides and the substrate, or the radiation detector may be integrated within the substrate under the waveguides. The sensors may be in vertical position or forming an angle with the grating. Due to the relatively weak signal that the interfering evanescent waves may provide, other features such as lenses, collimators, or any other optical system may be included between the diffraction grating and the photodetector array, for improving coupling of the radiation signal from the coupling means to the array.

In some embodiments of the present invention the coupling means may be a grating such as a continuous grating or an array of point scatterers. FIG. 4 shows the top view of some examples of diffraction gratings. In the left drawing 400, a silicon layer 202, 204 extends on top of a substrate comprising a top isolation layer 203 (e.g. silicon oxide). The narrow waveguide 205 and the wide waveguide 204 may be formed by a silicon rib (rib waveguide), comprising a strip (204, 205 in FIG 4) e.g. having a thickness of 215 nm and a slab (202 in FIG 4), e.g. having a thickness of 150 nm on top of the isolation layer 203 . The rib waveguides may be formed by partial etching of the silicon layer 220. The grating may be formed by thin ribs 401 of silicon, which are part of (are formed from) the silicon layer 202 up to a certain height, for example 215 nm on top of the isolation layer 203. In embodiments, other heights than 150 and 215 nm may be possible. In the right drawing 410, on the other hand, the grating may be formed by holes 411 in the silicon layer 202, e.g. portions of a thickness lower than the silicon layer thickness, or even holes that even reach the isolation layer 203, i.e. completely perforating the silicon layer 202.

The present invention is not limited to said thicknesses and dimensions of the layers, waveguides and diffraction gratings shown. The distance between the waveguides, their optical index, as well as the grating length, distribution, fill factor, grating strength and width may be optimized for a good coupling while at the same time avoiding distortion of evanescent fields.

After some basic configurations have been discussed, also some exemplary configurations are disclosed. Firstly, the influence of the waveguides and the optical indices will be discussed. Then, embodiments of diffraction gratings and optional features are disclosed, followed by optional tuners and features for adapting the zero-Optical Path Distance. Different sensors and devices for detecting the interferogram are also disclosed.

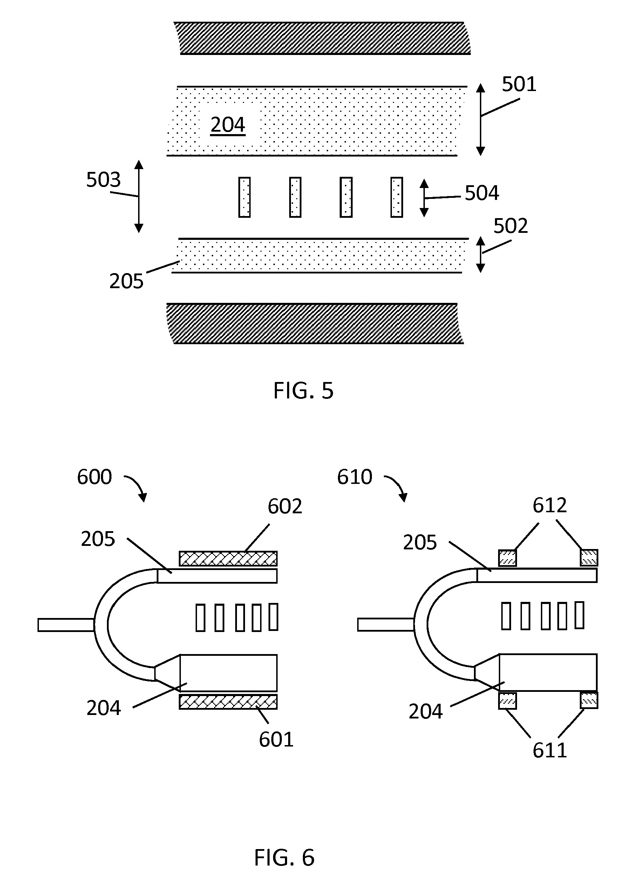

Regarding the tuning of the optical indices, FIG. 5 shows the top view of parallel waveguides whose optical indices are determined by different widths. The width 501 of the wide waveguide 204 and the width 502 the narrow waveguide 205 can be adapted taking into account the effective optical index of each of them. The width 501 of the wide guide may take exemplary values of 0.5 to 0.74 microns, while the width 502 of the narrow guide may take values between 0.4 and 0.6. For a couple of Si guides, width values of 0.7 and 0.5 may result in an (absolute) optical index difference of $(n1-n2) = \Delta n = 0.05$. Other values may be chosen according to each particular need or application. The following Table 1 gives some other examples of values for the width of the wide and narrow guide and their corresponding Δn for silicon.

Table 1. Optical index difference for different guide width pairs

| Wide guide in microns 501 | Narrow guide in microns 502 | Δn |
| --- | --- | --- |
| 0.5 | 0.4 | 0.0456 |
| 0.7 | 0.5 | 0.05 |
| 0.74 | 0.6 | 0.03 |

Several options of grating design will be further disclosed.

The interferogram is obtained by the interaction between the grating and the interference pattern between the waveguides. Power efficiency of the coupling also may be considered as a relevant factor. The power that is emitted by the grating to the detection system can be determined taking into account the power decay in the waveguide. If after length L all radiation is coupled out or lost due to waveguide losses, only part of the total interferogram is measured. On the other hand, if after length L only a little part of the light is coupled out, the detection system needs to be very sensitive, because the outcoupled intensity will be weak. A good compromise is that after a length L, the total power has decayed to 1/e of the input value. The power then decays according to :

$$P_{out} = e^{-\Gamma SL} \cdot e^{-\alpha L} P_{in}$$

where Γ is the confinement factor of the waveguide mode in the grating, α is the waveguide losses, S the strength of the grating and L the length of the interferogram, which shall advantageously be the same as the length of the coupling means in an optimal device. Given that the length L is a design parameter to tune the resolution, the parameters (Γ, S, α) may in some embodiments be optimized according to the confinement factor and grating strength, such that:

$$L = \frac{1}{\Gamma S + \alpha}.$$

Regarding the distance between the waveguide and the center of the grating, it can according to some embodiments be chosen so as to optimize the confinement factor. Of course the confinement factor (and losses) for a given distance will be different for two different waveguides, therefore the grating may be advantageously closer to a waveguide than to the other, thus it will be slightly offset from the center between both waveguides. The outcoupled power can be made substantially constant for a predetermined length unit. For a monochromatic input, a fixed amplitude factor for the standing wave pattern can be obtained in each length unit. This can be established by gradually varying the distance between each waveguide and the grating.

In the optimal case the radiation is coupled completely upwards to the detector array. However, the directionality of the grating can be limited due to fabrication constraints. Moreover, it may be wavelength-dependent. The radiation that is coupled downwards can be unwanted stray light and limits the power efficiency of the device, therefore the grating directionality may also be optimized.

The gap 503 between the waveguides, as well as the grating width 504, fill factor and period can also be tuned in order to ensure interference between the evanescent fields with a minimum distortion form the grating. Diffraction gratings may be contained in the gap between the waveguides.

Regarding the gap 503 between the waveguides, it may be chosen according to the envisaged application, probe radiation wavelength, and other factors. For example, the gap may be between 0.804 or 1.204 and 6 microns, for example 1.404, 1.604, 1.804, 2.004, 2.404, 3.4 or 4.5 microns.

Regarding the grating width, this parameter must be carefully chosen taken into account the output, the overlap of the evanescent waves, and other considerations such as manufacturing limitations. The evanescent tail from the parallel waveguides needs to be overlapping with the grating, otherwise there is no radiation that is coupled out. By increasing the overlap, the amount of emitted power is increased for a given length unit. Due to the quick decay of the evanescent tail with distance from the waveguide, only the edge of the grating (100-200 nm) gives a relevant contribution to the overlap. Therefore, if for a given gap between the waveguide and grating, the grating width increases beyond 100-200 nm, there will be no significant increase in the emitted power for a given length unit. In addition, it also means that the radiation is diffracted upwards from a small aperture, thus strong diffraction will occur, and the detection system should have a large numerical aperture to capture the light. If the grating width is increased such that the evanescent tails from both waveguides do not significantly overlap in the grating, the beating pattern (interferogram) is not created in the grating, but in the far field of the grating. In this case, the distance to the photodiode array should be adapted to properly detect the beating pattern. On the other hand, if the grating width is significantly decreased, the fabrication tolerance starts having influence. Certain features (<100 nm) are typically not printed with standard optical lithography and corner rounding will occur for features close to the critical dimensions of the lithography system which reduces the grating strength. Therefore there is manufacturing bottom limit for the grating width. The top limit for the grating width depends on the maximum distance from the grating where the beating pattern can be detected.

Another important factor that affects outcoupling is the back-reflection, which may be improved by grating design. To avoid back-reflection from the grating in either waveguide, or from one waveguide into the other (contra-directional coupling) for a given central operating wavelength, the grating pitch and fill factor need to be optimized. For a fill factor of 0.5 (as shown in Table 2), even diffraction-order reflections are suppressed, so this is a good choice for the fill factor. To optimize the pitch, the central operating frequency fc can be positioned in between the frequencies for which consecutive orders of backreflection occur for the grating. This way the bandwidth that can be used is maximized without reflection dips in the measured spectrum. This is obtained from the equation:

$$\frac{1}{f_c} = \frac{\frac{1}{f_{m+1}} + \frac{1}{f_m}}{2}$$

$$f_m = \frac{m \, c}{2 \cdot n_e \cdot \Lambda}$$

The diffraction order is m, c the velocity of light, $n_e$ the effective index of the mode in the grating and Λ the pitch of the grating. The pitch that is calculated in this way corresponds to a certain outcoupling angle of the grating for the central wavelength. This angle (in the cladding of the grating) can be calculated from the Bragg condition

$$\Lambda = \frac{\lambda}{n_e - n_{clad} \sin \theta}$$

The effective index of the cladding is $n_{clad}$ (or in general outside the waveguide, $n_0$). For the case that the central operating frequency is positioned between the second and third diffraction order, the pitch is reduced to:

$$\Lambda = \frac{6}{5} \frac{\lambda}{n_e}.$$

Solving the Bragg condition for this pitch provides the angle as:

$$\sin \theta = \frac{1}{6} \frac{n_e}{n_{clad}}.$$

For the case that the central operating frequency is positioned between the first and second order, the pitch is:

$$\Lambda = \frac{2}{3} \frac{\lambda}{n_e}.$$

Solving the Bragg condition for this pitch provides the angle as:

$$\sin \theta = -\frac{1}{2} \frac{n_e}{n_{clad}}.$$

Of course, the same reasoning can be done with larger diffraction orders. The optimal period can thus be defined for an outcoupling angle that is suitable for the detection system.

Nonetheless, the choice of angles has limitations.

EP 3 182 078 A1

For future integration with a photodetector array, it is convenient to have embodiments of the grating emitting at zero degree (vertical out-of-grating-plane emission). This angle can induce strong back reflection for gratings with horizontal symmetry. By breaking the symmetry, a completely vertically emitting grating can be designed without back reflection. Unfortunately, for these asymmetrical gratings a more expensive fabrication process is typically required.

Further examples of diffraction gratings may comprise metal microstructures, for example gold stripes as used in previous demonstrations of the SWIFTS spectrometer in a LIPPMANN configuration. The microstructures may be strictly between the waveguides or partially overlapping them.

Other features may be included in a device of the present invention, such as tuners, in order to optimize the modulation depth of the interference pattern and obtain better fringe contrast. This is obtained when the strength of interfering beams are substantially the same or at least very similar. The evanescent field decay length is different for different waveguide widths, therefore it is possible to implement a miniature FTIR with a tunable splitter instead of a fixed 3dB splitter, to tune the power ratio between the 2 modes in the separate waveguides. The tuning may advantageously be broadband and should equalize the power of the evanescent fields at the grating. The tuning may comprise tuning of the difference in group indices of the parallel waveguide modes.

As the effective index difference between both modes is a critical design parameter, it can, according to some embodiments, be made advantageously adjustable. A flexible design may be implemented to optimize the minimum sampling pitch A to match the sampling pitch of the detection system. This tuning of the effective index of the waveguide can be done with various methods, e.g. with an electronic driver circuit which can control the effective index using for example heaters, or tuning the optical properties of liquid crystals, or by electrical carrier injection. For example, FIG. 6 shows the top view of two embodiments according to the present invention. On the embodiment 600 on the left two heaters 601, 602 are provided, which tune by heating the indices of the wide guide 204 and the narrow guide 205 respectively. On the embodiment 610 on the right, two sets of electrodes 611, 612 may control the effective optical index of waveguides comprising liquid crystals, or by carrier injection. In the advantageous embodiment of the example shown, a wide and a narrow waveguide are shown, but they may present substantially the same width, as long as both guides present different effective and group optical index.

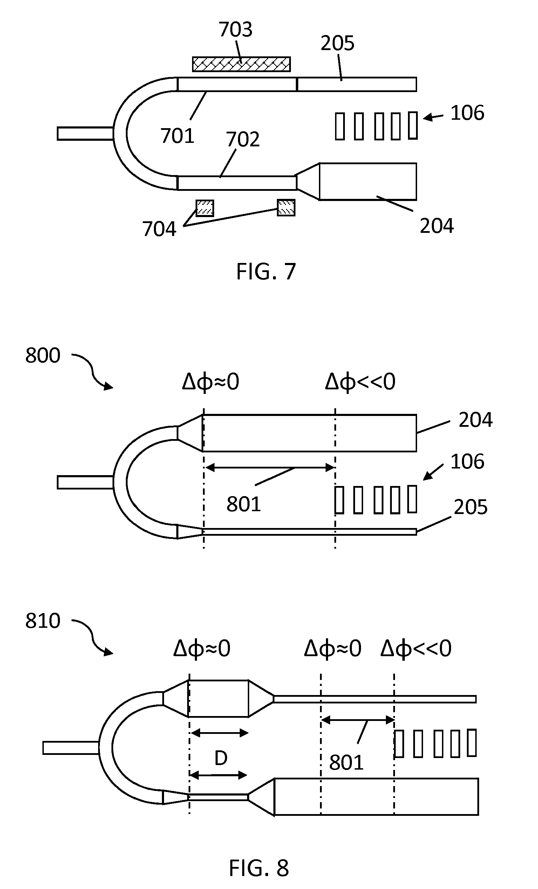

Other design features may present further advantages. The generated interferogram according to an embodiment of the present invention has extreme amplitude variations in the region of small phase delay difference between both beating modes. To measure these variations, a detection system with large dynamic range is needed. To relax this dynamic range requirement, the need for measuring of this initial small optical path difference (OPD) range can be reduced or avoided. FIG. 7 shows the top view of a simple implementation of an embodiment allowing tuning the initial phase difference between both beams, which allows to position the zero-OPD range before the grating, by changing the effective index of the individual waveguides 701, 702 in the section preceding the grating 106, for example by a heating element 703 and e.g. a set of electrodes 704, but any other suitable possibility is available. The grating only couples the part of the interferogram that has smaller amplitude variations out to the detection system. The phase difference can be tuned.

Alternatively or additionally to active tuning, the zero-OPD point may be advantageously positioned away from the grating as shown in the top view of the two designs in the embodiments of FIG. 8. The upper embodiment 800 shows an offset 801 fixed by a suitable and accurate choice of position of the grating 106 and of the indices n1 of the wide guide 204 and n2 of the narrow guide 205. At the beginning of the waveguides, the OPD is close to zero, and the offset distance 801 results in an OPD higher than zero at positions arranged adjacent to the coupling means. The lower embodiment 810 shows yet another way of increasing the distance between the zero-OPD and the grating, using portions D of waveguides with different widths (thus, different optical indices) in each path, connected by means of e.g. several tapers. The distance between the grating and the splitter can be made much larger.

For example, coupling to the sensor array may be done through air, or it may be done through a cladding layer. The cladding may also be tailored for improving interference between the evanescent fields, or for coupling the pattern with the sensor array. Other further features may be grating couplers for input and output of radiation beams.

The parallel waveguides may be coupled again into a single fiber, or may have independent outputs, for instance to a fiber grating coupler for each guide. An output or sensor may be further included for the beams in the guides.

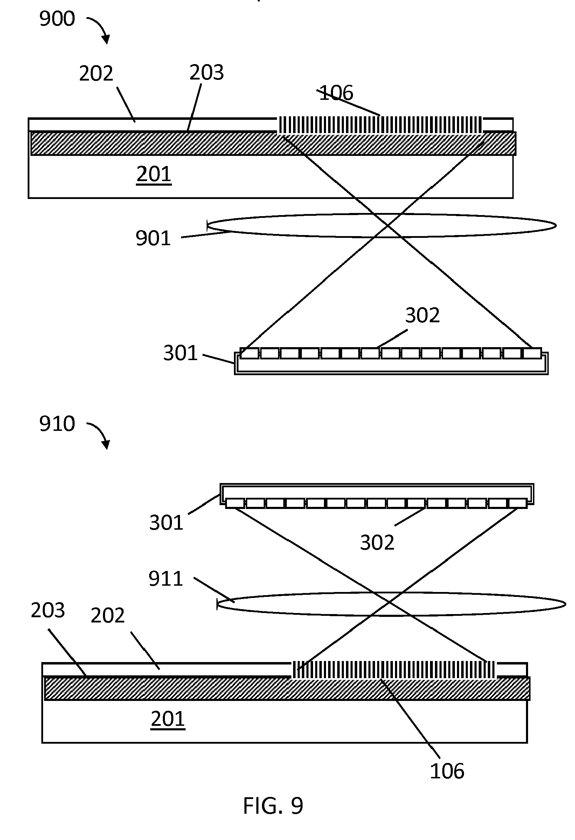

The generated interferogram can be sensed and measured using the sensor array of for example FIG. 3. By positioning the radiation detector in the Fraunhofer far field, the Fourier transform is also implemented, and the input spectrum can be directly retrieved. In alternative embodiments, a lens can be used to focus the interferogram onto a radiation detector, e.g. CMOS imager, at a distance. This method is also compatible with a 1D photodiode array. FIG. 9 shows the lateral view of two basic configurations that use a lens to project the interferogram onto a photodiode array (e.g. a CMOS imager chip). In the upper embodiment 900, a lens with high numerical aperture 901 magnifies the interferogram through the waveguide substrate, e.g. a SOI substrate 201 comprising an upper layer 202 of Si material or a SiN On Insulator substrate comprising an upper layer 202 of SiN material on top of e.g. an oxide layer 203. The radiation is coupled from the coupling means 106 to the sensing elements 302 of a sensor array 301 in the backside of the device. In the lower embodiment 910, the lens 911 and the sensor array 301 are on top of the device, thus the diffraction pattern is directly coupled. Both embodiments may be combined. In both cases, a magnification factor, spatially stretching the interferogram, can be implemented. Further, the lens itself can advantageously be used to perform Fourier imaging by positioning the photodiode array in the Fourier-plane of the lens. Fourier data processing can thus be implemented in hardware rather than in software. In this case, the spectrum of the input of the spectrometer is then directly imaged onto the photodiode array.

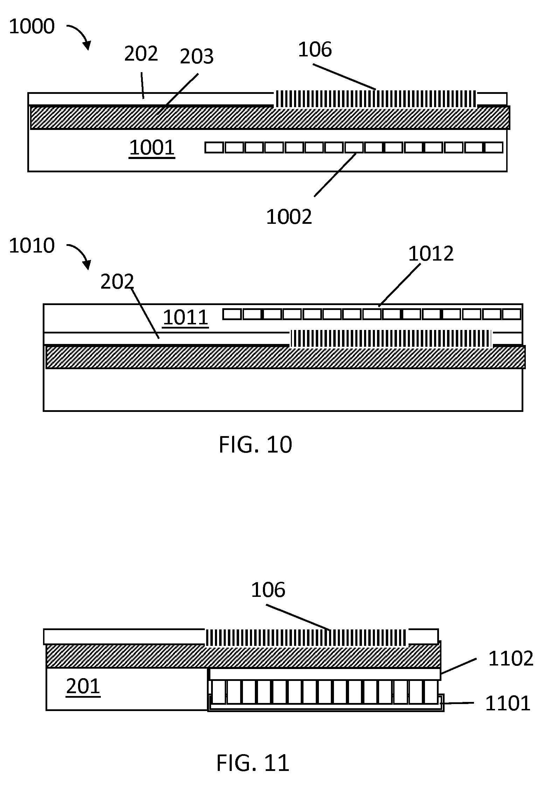

In monolithic, integrated embodiments shown in FIG. 10 (lateral view), the waveguide circuit can be obtained in a SiN layer on top of, or under, a CMOS imager wafer. It is also possible to attach the CMOS imager wafer by direct wafer bonding on top of or at the bottom of a processed wafer with SiN. The grating should then be designed to preferentially emit upwards or downwards, respectively. In the upper embodiment 1000, the waveguide circuit comprising the grating 106, a SiN or Si layer 202 on top of the oxide layer 203 is on top of the CMOS imager wafer 1001 comprising a pixel grid 1002. In this case, the grating may emit preferentially downwards to the CMOS imager for optimal functionality. The lower embodiment 1010 shows a CMOS imager wafer 1011 directly attached on top of the SiN layer 202 of the circuit. The pixel size of CMOS imagers can advantageously be very small, such that for a given effective and group index difference, a small wavelength can be detected. However, by using a silicon CMOS imager as the detector array, the operation range is limited to wavelengths below 1.1 microns.

Embodiments of the present invention may use linear photodiode arrays. In this case, the photodiode array can be attached on top of the Si or SiN layer, or at the bottom of the substrate, for receiving radiation from the grating similarly to the embodiment with CMOS. It may be possible, as shown in FIG. 11 (lateral view), to manufacture the optical circuit on a waveguide substrate, e.g. SOI substrate, 201 by removing (e.g. by etching) the part of the substrate under the grating 106 and placing a 2D photodiode array 1101, for example attached by an adhesive layer 1102.

A device according to embodiments of the present invention may be obtained by existing semiconductor processing. The optical system may be obtained for different attachable light sources and detectors. A compact monolithic integrated optical device may also be obtained. CMOS technology can be applied in the manufacture of the device, which provides high quality, high yield and cost reduction. The photodetector array can be provided on top of the photonics chip, or vice versa, the photonic structures can be fabricated on top of a photodetector array. Any standard wafer (e.g. 200 mm wafer) may be used for manufacturing the waveguide substrate, e.g. SOI substrate, and the device. For example, a monocrystalline silicon layer with a thickness of 200 nm, or 150 nm, or any other thickness suitable for photonics applications, may be provided on top of a buried oxide layer of 1 micron thickness on a Si substrate. Instead of Si, a layer of SiN may be used. The waveguides may be obtained by any technique or combination thereof, such as mask deposition, lithography, etching, stripping and transfer of the pattern, chemical vapour deposition (CVD), plasma-enhanced CVD, polishing, etc. The spectrometer may be built in an area of 10 mm of length and 0.1 mm of width. Other sizes are possible. The spectrometers can be produced by masking, for example on dice with masks of 12.2 x 1.5 mm.

In a second aspect, a method for obtaining an interferogram from EM radiation such as visible light, laser, IR, or others is disclosed. The method advantageously can be performed using an optical device or spectrometer according to embodiments of the first aspect as disclosed above. The method comprises receiving a polarized radiation beam. It also comprises splitting the radiation beam in two radiation beams and coupling these into two substantially parallel waveguides of different effective and group optical indices. The two substantially parallel waveguides are arranged with respect to each other so that their evanescent tails of the radiation modes overlap and thus produce a stationary spatial interference signal in the space between the two substantially parallel waveguides. The method also comprises coupling the interference pattern to a detector array for recording the interferogram.

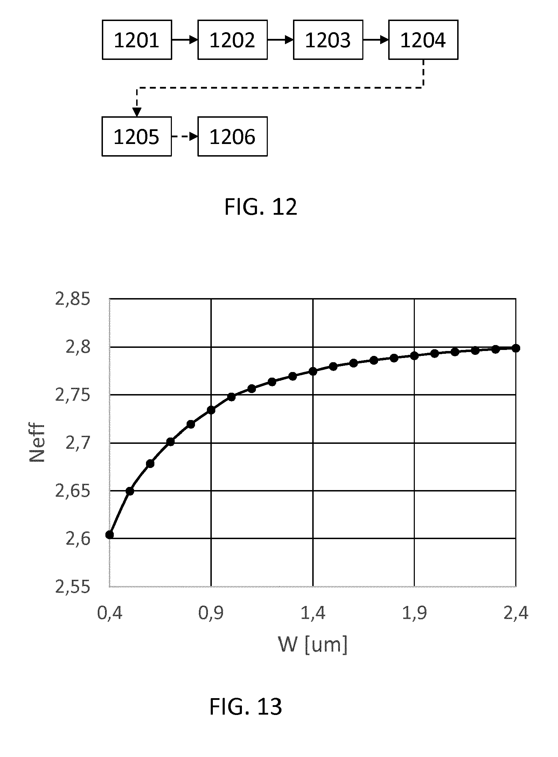

By way of illustration an exemplary method is shown in a flowchart in FIG. 12. The exemplary method may comprise the steps of introducing 1201 a radiation beam comprising a wavelength $\lambda$ in a waveguide. The beam may be for example polarized radiation. The method comprises further dividing or splitting 1202 the beam in two waveguides of two different effective and group optical indices. Because the light travelling the parallel guides have the same direction and carry the same spectral content, the fundamental mode is excited equivalently in both waveguides. The evanescent waves of both guides are close together (e.g. since both waveguides are physically close to each other) forming 1203 an stationary spatial interference pattern in between the waveguides, which shall present an interference period of $\lambda/(n1-n2)$. This pattern is coupled 1204 to a detector array so the interferogram can be retrieved. The coupling may be done with a diffraction grating.

The method may include other optional steps, for example independently reading 1205 each of the signals travelling through each waveguide and, for example, comparing 1206 the value of the reading with each other and with the interferogram.

Methods and devices according to the present invention provide a resolution improvement with respect to the spectrometers of the prior art.

The resolution of a FTIR depends on the length L of the measured interferogram. If the (spatial) interferogram is not measured completely, the interferogram is in practice convolved with a rectangular window with length L. In the Fourier domain this means that the spectrum is broadened with a sinc-function $\frac{sin(\pi \cdot f \cdot L)}{(\pi \cdot f \cdot L)}$ , being f the spatial frequency.

The Full Width At Half Maximum (FWHM) of this function can be written as $FWHM = \frac{1.207}{L}$. For the miniature FTIR the present spatial frequencies depend on the propagation constant difference of the 2 modes that create the interferogram. The spatial beatnotes in the interferogram vary as $cos(\Delta\beta*z)$ with z the propagation direction and $\Delta\beta$ as

$$\Delta\beta = \beta 2 - \beta 1 = \frac{2\pi}{\lambda} \cdot (n_2 - n_1) = \frac{2\pi}{\lambda} \Delta n.$$

Therefore, the spatial frequency f can be written as $\frac{\Delta\beta}{2\pi} = \frac{\Delta n}{\lambda} = \Delta n \cdot v$ .

In terms of the resolution this means that:

$$\delta v = \delta\left(\frac{1}{\lambda}\right) = \frac{\delta\lambda}{\lambda^2} = \frac{1.207}{\Delta ng\ L}.$$

The wavelength resolution can be approximated as

$$\delta\lambda = \frac{\lambda^2}{\Delta ngL}.$$

It shows that the resolution can be improved by maximizing the group index difference $\Delta ng$ between the 2 beating modes, or by increasing the length L of the interferogram. As a comparison, for the prior art SWIFT configuration as described in "Nature Photonics, Vol. 1 Aug. 2007, 473", the resolution is:

$$\delta\lambda = \frac{\lambda^2}{2ngL}.$$

Increasing the effective index difference between both modes, increases the maximum present spatial frequency fmax. This effectively means that, in order to obey the Shannon-Nyquist sampling theorem $\left(\text{fsampling} > 2\ \text{fmax} = 2\frac{\Delta n}{\lambda_{min}}\right)$ for a given minimum wavelength that should be detected, the sampling pitch becomes smaller. The sampling pitch is $\Lambda = \frac{\lambda_{min}}{2\Delta n}$ .

Considering that $n_g = n_{eff} - \lambda \cdot \frac{\partial n_{eff}}{\partial\lambda}$ , then the difference in effective index $\Delta n$ can be written as

$$\Delta n = \Delta n_g - \lambda \cdot \left(\frac{\partial n_{eff,1}}{\partial\lambda} - \frac{\partial n_{eff,2}}{\partial\lambda}\right).$$

In a first order approximation the second term is negligible and the difference in effective index is equal to the difference in the group indices.

In the short wavelength range, for a resolution of 1 nm at a minimum wavelength of 0.8 microns and a 1 cm long interferogram the effective index difference is:

$$\Delta n = \frac{(0.8um)^2}{1nm*1cm} = 0.064, \quad \Lambda = \frac{0.8\ [um]}{2\cdot 0.064} = 6.25\ um.$$

In the telecom wavelength range: for a resolution of 1 nm at a minimum wavelength of 1.5 microns and a 1 cm long interferogram, the same difference is:

$$\Delta n = \frac{(1.5um)^2}{1nm*1cm} = 0.225, \; \Lambda = \frac{1.5\,[um]}{2\cdot0.225} = 3.3\,um.$$

The latter difference in effective indices (0.225) of the beating modes can be quite high to achieve with a suitable waveguide width difference, as can be seen in FIG. 13, showing the effective index Neff as a function of the waveguide width W, for a ridge waveguide fabricated in the silicon-on-insulator material platform with 220 nm Si thickness and a wavelength of 1.55 microns. Smaller waveguide widths typically increase the losses of the device and for wider widths the change in effective index in function of width tops off.

It may be possible to obtain a large difference in groups index between both modes, by suitable adapting the waveguide height and waveguide cladding.

The broad optical bandwidth obtained by methods and spectrometers according to the present invention is highly relevant for any application that intrinsically requires spectral decomposition over a wide wavelength range, such as Raman spectroscopy, but it may be applied to fluorescence spectrometry, post-dispersive spectrometry, holography, IR spectroscopy, etc.

**Claims**

1. An optical device for assisting in Fourier transform spectrometry comprising:

   - a radiation input means for receiving a polarized radiation,
   - two substantially parallel waveguides having different effective and group optical indices, whereby the two substantially parallel waveguides are arranged with respect to each other so that their evanescent tails of the radiation modes overlap and thus produce a stationary spatial interference signal in the space between the two substantially parallel waveguides,
   - an optical splitter for dividing the polarized radiation beam received at the radiation input means into the two parallel waveguides and for coupling two radiation beams respectively into the two substantially parallel waveguides, and
   - a coupling means being positioned between the parallel waveguides for coupling the stationary spatial interference signal from the space between the waveguides to a radiation sensor.

2. The optical device according to claim 1, wherein the two substantially parallel waveguides have a different width, a different height, a different waveguide cladding and/or are made of a different material so as to induce the different effective and group optical refractive indices.

3. The optical device according to any of the previous claims, wherein the optical splitter is a tunable splitter allowing to tune the power ratio between the modes of the two radiation beams coupled respectively into the two parallel waveguides.

4. An optical device according to any of the previous claims, wherein the optical device furthermore comprises one or more refractive index tuning means for tuning a refractive index of one or both of the parallel waveguides in a region adjacent to the coupling means.

5. The optical device according to the previous claim, wherein the optical device is adapted for tuning the position of the zero optical path difference in the waveguides away from the coupling means and/or wherein the optical device is adapted in design for having a zero optical path difference in the waveguides away from the coupling means.

6. The optical device according to any of the previous claims, wherein the coupling means comprises any of an array of point scatterers and/or a continuous grating and/or an asymmetrical grating.

7. The optical device according to any of the previous claims, wherein the coupling means has a length L such that

$$L = \frac{1}{\Gamma S + \alpha}$$

with $\Gamma$ the confinement factor of the waveguide mode in the coupling element, S the strength of the coupling element

and $\alpha$ the waveguide losses.

**8.** The optical element according to any of claims 6 or 7, wherein the coupling means is a grating having a fill factor of 0.5 and/or having a pitch such that the central operating frequency of the grating is positioned in between the frequencies for which consecutive order of backreflection occur for the grating.

**9.** The optical element according to any of the previous claims, wherein a single waveguide is present between the radiation input means and the optical splitter.

**10.** The optical element according to any of the previous claims, wherein at least part of the parallel waveguides are integrated in a waveguide substrate.

**11.** A spectrometer for performing Fourier Transform spectrometry, the spectrometer comprising an optical device according to any of the previous claims and a radiation sensor arranged for receiving the stationary spatial interference signal coupled out by the coupling means.

**12.** A spectrometer according to claim 11, wherein said radiation sensor is any of a CMOS imager, a photodiode array and/or wherein the spectrometer comprises a lens for imaging the the stationary spatial interference signal onto said radiation sensor.

**13.** A spectrometer according to any of claims 11 to 12, wherein the optical device element and the radiation sensor both are integrated in a same waveguide substrate or in different waveguide substrates bonded to each other.

**14.** A method of obtaining an interferogram from an electromagnetic signal, comprising

- receiving a polarized radiation beam

- splitting the radiation beam in two radiation beams and coupling these into two substantially parallel waveguides of different effective and group optical indices, the two substantially parallel waveguides being arranged with respect to each other so that their evanescent tails of the radiation modes overlap and thus produce a stationary spatial interference signal in the space between the two substantially parallel waveguides,
- coupling the interference pattern to a detector array for recording the interferogram.

**15.** Use of an optical device according to any of claims 1 to 10 or a spectrometer according to any of claims 11 to 13 for any of Raman spectrometry, fluorescence spectrometry or post-dispersive spectrometry.

FIG. 1

FIG. 2

FIG. 3

FIG. 4

204

501

503

504

502

205

FIG. 5

600

602

205

602

204

601

610

612

205

611

204

611

FIG. 6

703

205

701    702

106

204

704

FIG. 7

800

$\Delta\phi\approx0$    $\Delta\phi\ll0$

204

106

801

205

810

$\Delta\phi\approx0$    $\Delta\phi\approx0$  $\Delta\phi\ll0$

801

D

FIG. 8

FIG. 9

1000

202  203     106

1001     1002

1010

202     1012

1011

FIG. 10

106

201     1102     1101

FIG. 11

```
┌────────┐    ┌────────┐    ┌────────┐    ┌────────┐
│  1201  │───▶│  1202  │──▶ │  1203  │──▶ │  1204  │
└────────┘    └────────┘    └────────┘    └────────┘
      │                                          ┊
      ┊                                          ┊
      ▼                                          ┊
┌────────┐    ┌────────┐                         ┊
│  1205  │--▶ │  1206  │◀┈┈┈┈┈┈┈┈┈┈┈┈┈┈┈┈┈┈┈┈┈┈┈┈┈┘
└────────┘    └────────┘
```

FIG. 12

FIG. 13

Europäisches
Patentamt

European
Patent Office

Office européen
des brevets

# EUROPEAN SEARCH REPORT

Application Number

EP 15 20 0977

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2013/162528 A1 (HEWLETT PACKARD DEVELOPMENT CO [US]; SANTORI CHARLES M [US]; LIANG DI) 31 October 2013 (2013-10-31) * paragraphs [0002], [0011], [0012], [0021], [0022] - [0025], [0028], [0066] - [0071], [0073] - [0076], [0098] * ----- | 1-15 | INV. G01J3/02 G01J3/453 |
| | | | TECHNICAL FIELDS SEARCHED (IPC) |
| | | | G01J G02B |

The present search report has been drawn up for all claims

| Place of search | Date of completion of the search | Examiner |
|---|---|---|
| Munich | 14 June 2016 | Jacquin, Jérôme |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 15 20 0977

This annex lists the patent family members relating to the patent documents cited in  the above-mentioned European search report.
The members are as contained in the European Patent Office EDP file on
The European Patent Office is in no way liable for these particulars which are merely given for the purpose of information.

14-06-2016

| Patent document cited in search report | Publication date | Patent family member(s) | Publication date |
|---|---|---|---|
| WO 2013162528    A1 | 31-10-2013 | CN     104081175  A<br>EP       2841893  A1<br>KR   20150003715  A<br>US     2014362374  A1<br>WO     2013162528  A1 | 01-10-2014<br>04-03-2015<br>09-01-2015<br>11-12-2014<br>31-10-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *Proc. of SPIE,* vol. 8816

- *Nature Photonics,* August 2007, vol. 1, 473